# EUROPÄISCHE PATENTSCHRIFT

(11) **EP 3 105 462 B1**
(45) Veröffentlichungstag und Bekanntmachung des Hinweises auf die Patenterteilung: **13.10.2021**
(21) Anmeldenummer: 15705199.6
(22) Anmeldetag: 10.02.2015
(51) Int. Cl.: F16B 39/02

(54) **MASCHINENELEMENT**
MACHINE ELEMENT
ÉLÉMENT DE MACHINE

(30) Priorität: 11.02.2014 DE 102014002191
(43) Veröffentlichungstag der Anmeldung: 21.12.2016
(73) Patentinhaber: Spieth-Maschinenelemente Gmbh & Co Kg, 73730 Esslingen (DE)
(72) Erfinder: HUND, Alexander, 73773 Aichwald (DE)
(74) Vertreter: Bartels und Partner, Patentanwälte
(86) Internationale Anmeldenummer: PCT/EP2015/000289
(87) Internationale Veröffentlichungsnummer: WO 2015/120976

(56) Entgegenhaltungen:
- DE-A1- 4 339 978
- DE-C- 393 662
- FR-A1- 2 923 742
- US-A- 4 898 398

## Beschreibung

Die Erfindung betrifft ein Maschinenelement, aufweisend einzelne Ringkomponenten, die an Drittbauteilen, wie beispielsweise Achsen, Wellen oder Naben festlegbar sind, von denen mindestens eine Ringkomponente auf mindestens eine weitere Ringkomponente in einer axialen Richtung gesehen mittels einer Einstelleinrichtung in einer Zustellbewegung betätigbar ist, wobei mittels der Einstelleinrichtung für die Zustellbewegung eine Schrägkrafteinleitung auf mindestens eine der Ringkomponenten in einer geneigten Richtung erfolgt, die von der axialen Zustellrichtung abweicht, und wobei diejenige Ringkomponente, die der Schrägkrafteinleitung ausgesetzt ist, mit zumindest einem Teil einer Anlagefläche für die Anlage mit der Einstelleinrichtung der geneigten Richtung nachfolgt, wobei in einem gewindefreien Abschnitt der Einstelleinrichtung diese derart eine geneigte Steuerfläche aufweist, dass sie der Anlagefläche mit ihrer geneigten Richtung zumindest bei betätigter Einstelleinrichtung nachfolgt, wobei die Einstelleinrichtung mindestens einen Einstellbolzen aufweist, der für die Schrägkrafteinleitung mittels seines gegenüber dem Einstellbolzen im Durchmesser erweiterten Kopfteils zumindest auf eine der Ringkomponenten diese dabei durchgreift und mindestens mit einer jeweils weiteren Ringkomponente verbunden ist.

Ein derartiges Maschinenelement ist aus DE 393 662 C bekannt, die eine Schraubensicherung offenbart, bei der in die Mutter senkrecht zur Achse der Schraube ein Querschlitz eingeschnitten ist, sodass zwei federnde zungenartige Teile gebildet werden. In den einen Zungenteil ist ein Gewinde eingeschnitten, während in dem anderen Zungenteil, gleichachsig mit der Gewindebohrung, eine glatte zylindrische Bohrung angeordnet ist. Durch diese Bohrung wird eine Sicherungsschraube hindurchgesteckt und mit ihrem Gewindeteil in das Muttergewinde eingeschraubt.

DE 43 39 978 A1 betrifft eine Einrichtung zur Befestigung eines Teiles auf einer glatten oder profilierten Welle, mit wenigstens einem auf der Welle angeordneten inneren Spannring, zwischen dem und dem dazu konzentrischen Teil wenigstens ein Druckstück zum radialen Spreizen wenigstens des inneren Spannringes vorgesehen ist, wobei der innere Spannring durch wenigstens einen Steg einstückig mit dem Teil verbunden ist. Bei der Einrichtung ist an wenigstens einer von beiden einander zugewandten Mantelseiten des Teils und des inneren Spannringes eine konisch ausgebildete Anlagefläche für das keilfömige, axialbewegliche Druckstück ausgebildet, wobei das Druckstück ein konisch ausgebildeter Schraubenkopf einer Schraube ist.

Dahingehende Maschinenelemente lassen sich für eine Vielzahl von möglichen Anwendungsgebieten einsetzen. Erfolgt die Verwendung des Maschinenelements als Spannsatz, erlaubt dies aufgrund des Ringkomponentenaufbaus mit Einstelleinrichtung das Herstellen von kraftschlüssigen WellenNaben-Verbindungen. Für die dahingehende Anwendung wird darauf geachtet, dass die Geometrie der eingesetzten einzelnen komponentenartigen Ringkörper einen möglichst absolut symmetrischen Grundkörper ergibt, was bei einem axialen Zusammendrücken der Ringkomponenten mittels der Einstelleinrichtung für eine gleichmäßige Querkontraktion in Richtung Welle und Nabe führt, wobei die damit erzielbare Zentrierwirkung auf dem Niveau des sog. Hydrodehnprinzips einzuordnen ist, was konstruktiv viel einfacher, viel sicherer und viel steifer als bei sonstigen Vergleichslösungen gelingt. Um eine hohe Krafteinleitung über die Einstelleinrichtung zu ermöglichen, werden im Wesentlichen, auch für die einzelnen Ringkomponenten, Stahlmaterialien zum Einsatz gebracht.

Eine weitere Anwendung als Maschinenelement besteht im Rahmen von Führungsbuchsen, die runde Linearführungselemente für den Maschinen- und Vorrichtungsbau darstellen. Der Einsatz solcher Führungsbuchsen ist dann angezeigt, wenn die Vorteile der Gleitführung, z.B. hohe Dämpfung, genutzt werden sollen und dabei gleichzeitig geringstes Führungsspiel verlangt wird. So werden die Führungsbuchsen insbesondere an Führungsgestellen, an Rundschlittenführungen sowie an Reitstockpinolen zum Einsatz gebracht. Zusätzlich zur angesprochenen Linearbewegung sind auch gleichzeitige Drehbewegungen möglich, wobei jedoch aus schmiertechnischen Gründen heraus eine reine Drehbewegung im Sinne eines Gleitlagers hierbei nicht realisiert wird. Da mit den Führungsbuchsen für jeden Betriebszustand optimal ein Fügespiel einstellbar sein soll, werden regelmäßig nachgiebige Materialien eingesetzt, beispielsweise in Form von Bronze-Werkstoffen.

Da hydrodynamisch geschmierte, einstellbare Mehrflächen-Radialgleitlager, wie sie hauptsächlich im Maschinenbau zum Einsatz kommen, gleichfalls mittels einer Einstelleinrichtung gegeneinander verspannbare Ringkomponenten aufweisen, lassen sich die für Spannsätze und Führungsbuchsen entwickelten Grundlösungen auch auf solche Radialgleitlagerlösungen übertragen.

Besonders bevorzugt sind hier jedoch sog. Stellmutterlösungen oder Gewinderinge angesprochen, die mit äußerster Genauigkeit und gleichmäßigen Klemmkräften bezogen auf ihre Gewindeflanken sich auf Spindelgewinden und dergleichen mehr als Drittbauteile festlegen lassen.

Ein Vertreter einer solchen Stellmutter als Maschinenelement ist in der DE 25 44 498 C3 aufgezeigt. Bei dieser bekannten Lösung handelt es sich im Sinne einer Stellmutter um einen Gewindering, welcher einstückig ausgebildet ist und durch eine von der Außenumfangsfläche ausgehende Ringnut und durch eine versetzt dazu angeordnete, von der Innenumfangsfläche ausgehende Ringnut in zwei als Konterring und als an einen zu spannenden Ringkörper anlegbaren Stellring sowie ein dazwischen angeordneten, wesentlich schmäleren Zwischenring unterteilt ist, der an seinem Innenumfang mit einem der Ringe und an seinem Außenumfang mit dem anderen dieser Ringe verbunden ist, wobei der Konterring und der Zwischenring aufseiten ihrer Verbindungsstelle ein gemeinsames Gewinde aufweisen, und welcher Gewindering mittels einer Anzahl parallel zu seiner Achse sich erstreckender, jeweils für sich nachstellbarer, auf einem mittleren Umfang gleichmäßig verteilt angeordneter Schrauben verspannbar ist, wobei die Schrauben in den Konterring eingeschraubt sind, den Zwischenring mit Spiel durchsetzen und sich am Stellring abstützen.

Bei dieser bekannten Maschinenelement-Lösung kommen also insgesamt drei Ringkomponenten zum Einsatz, die über sog. Membranteile mit dünnwandig ausgebildeten Wandabschnitten in Hintereinanderreihung miteinander permanent verbunden sind. Als Einstelleinrichtung dienen hier mehrere gleichmäßig um den Außenumfang des Gewinderinges verteilte Einstell- oder Schraubenbolzen.

Sofern der Schraubenbolzen gemäß der Ausführungsform nach der Fig.5 ein im Durchmesser gegenüber dem Bolzenteil erweitertes Kopfteil aufweist, kommt es in axialer Stellrichtung gesehen zu einer Zustellbewegung zwischen zumindest einem Teil der Ringkomponenten, die aufeinander zu, aber auch voneinander weg bewegt werden können und die als Senkkopfteile ausgebildeten Köpfe der Einstell- oder Schraubbolzen kommen in plane Anlage mit der benachbart zugewandten, eben verlaufenden Anlagefläche des in Folge zuerst kommenden Ringkörpers des Verbundes.

Steht nun in axialer Zustellrichtung gesehen für das eingesetzte Maschinenelement mit seinen Ringkörpern nur ein geringer Bauraum zur Verfügung, wäre es wünschenswert, zumindest die Ringkomponente, an der das Kopfteil des Schrauben- oder Einstellbolzens anlegbar ist, in seiner Baulänge zu reduzieren. Da man aber die Schrauben- oder Einstellbolzen selbst von ihren geometrischen Abmessungen her nicht ändern kann, da sie sonst nicht in der Lage sind, die benötigten Einstell- und Zustellkräfte auszuüben, würde bei einer Reduzierung der axialen Einbaulänge der genannten ersten Ringkomponente zum einen der zylindrische Schraubenkopf als Kopfteil dann Bauraum benötigend überstehen und die verbleibende Restwanddicke, die die Anlagefläche ausbildet, für die Anlage mit dem Kopfteil des Schrauben- oder Einstellbolzens würde zu einer membranartigen Durchbiegung oder gar zu einem Durchreißen der verbleibenden Stützwand führen mit der Folge, dass das Gesamt-Maschinenelement für die Anwendung unbrauchbar wäre. Daran ändert sich auch nichts, wenn grundsätzlich gemäß den Lösungen nach den Fig. 1 bis 4 der DE 25 44 498 C3 das Kopfteil in Schräganordnung auf seiner Außenumfangsseite ein Außengewinde trägt, das mit einem Innengewindeabschnitt der ersten außen liegenden Ringkomponente in Eingriff steht.

Dass hier ein grundsätzlich zu lösendes Problem besteht, hat die Fachwelt erkannt und zur Beseitigung der angesprochenen Nachteile ist in der DE 10 2004 003 183 A1 eine modifizierte Gewinderinglösung vorgeschlagen worden. Der bekannte Gewindering, dessen mit Innengewinde versehener, einstückiger Körper zwei Körperteile in Form zweier Ringkomponenten aufweist, deren erster einen Stellring mit einer endseitigen in einer Radialebene liegenden Planfläche bildet und deren zweiter Körperteil einen Sicherungsring bildet, der mit dem ersten Körperteil unter Bildung eines zwischen beiden Körperteilen befindlichen Spalts über ein elastisch nachgiebigen Wand- oder Membranteil des Körpers verbunden ist und eine Betätigungseinrichtung als Einstelleinrichtung aufweist, mittels deren die Geometrie des Spaltes aufgrund der elastischen Nachgiebigkeit des Wand- oder Membranteils einstellbar ist, ist dadurch charakterisiert, dass die Kopfauflageflächen für die Schraubenköpfe als Kopfteile von Einstell- oder Schraubenbolzen innerhalb der jeweiligen Ringkomponente definiert schräg ausgeführt sind im Sinne einer von der axialen Zustellrichtung abweichenden geneigten Richtung, so dass die Schraubenköpfe einseitig an der Kopfauflageseite des benachbart angeordneten Gewinderinges als Ringkomponente zur Anlage kommen. Dergestalt ist ein Gewindering geschaffen mit verbessertem Wirkungsgrad, der von den Bauabmessungen her kleiner aufbauen kann als die eingangs erwähnte Lösung nach der DE 25 44 498 C3.

Trotz dieser verbesserten Lösung lässt diese aber nach wie vor Wünsche offen, betreffend auf kleinstem axialen Bauraum möglichst hohe Spann- oder Einstellkräfte mittels der Einstelleinrichtung auf eine Ringkomponenten-Anordnung aufbringen zu können.

Demgemäß liegt der Erfindung die Aufgabe zugrunde, die bekannten Lösungen dahingehend weiter zu verbessern, dass bei hohen Wirkungsgraden mit einfachem Aufbau und in kostengünstiger Weise herstellbar sich Maschinenelemente, wie Stellmuttern oder Gewinderinge, derart realisieren lassen, dass sie sich auch bei ausgesprochen klein aufbauenden Bauräumen, wie sie durch Drittbauteile in der Praxis vorgegeben sind, sicher und effizient festlegen lassen. Überdies ist es Aufgabe der Erfindung, ein im Durchmesser vergrößertes Eingriffsteil zu erhalten für einen verbesserten Angriff mit einem Betätigungswerkzeug. Eine weitere Aufgabe besteht darin, die vorzugsweise für Stellmuttern verwendbare Elementlösung für andere Maschinenelemente zugänglich zu machen, wie Spannsätze, Führungsbuchsen oder Lager, vorzugsweise in Form von Radialgleitlagern. Eine dahingehende Aufgabe löst ein Maschinenelement mit den Merkmalen des Patentanspruchs 1 in seiner Gesamtheit.

Dadurch, dass gemäß Patentanspruch 1 in einem gewindefreien Abschnitt der Einstelleinrichtung diese derart eine geneigte Steuerfläche aufweist, dass sie der Anlagefläche mit ihrer geneigten Richtung bei betätigter Einstelleinrichtung nachfolgt, wird zwar in axialer Zustellrichtung gesehen mittels der Einstelleinrichtung gegenüber den bekannten Zylinderkopfschraubenlösungen nur eine geringere axiale Zustellkraft erreicht; aufgrund der geneigten Kraft- oder Schrägkrafteinleitung über die jeweils geneigte Steuerfläche und die korrespondierend geneigte Anlagefläche im gewindefrei gehaltenen Eingriffsabschnitt der Einstelleinrichtung, lässt sich aber über einen größeren Schrägflächenbereich eine deutlich höhere Reibung als wirksame Schrägkraftkomponente aufbauen, die dazu führt, dass bei geometrisch klein aufbauender Einstelleinrichtung dennoch die aufgebrachte Schrägkraft genügt, um sicher die Ringkomponenten auf dem Drittbauteil gegeneinander positionieren und in dieser jeweiligen Position halten zu können.

Es ist für einen Durchschnittsfachmann auf dem Gebiet dahingehender Maschinenelemente überraschend, dass er trotz Kenntnis der Gewinderinglösung nach der DE 10 2004 003 183 A1 zu einer noch verbesserten Eingriffslösung kommen kann, sofern er die Einstelleinrichtung mit einer geneigten Steuerfläche versieht, die korrespondierend der geneigten Anlagefläche an der benachbarten Ringkomponente entspricht. Aufgrund der erhöhten Reibung zwischen Anlagefläche und Steuerfläche lassen sich die eingesetzten Schrauben- oder Einstellbolzen der Einstelleinrichtung noch weiter miniaturisieren, so dass trotz sehr beengter Einbauverhältnisse die Ringkomponenten wirksam gegen einander justierbar sind.

Erfindungsgemäß ist überdies vorgesehen, dass die geneigte Steuerfläche Bestandteil eines Steuerkonus am Kopfteil des Einstellbolzens ist, dass die Anlagefläche der anlegbaren Ringkomponente korrespondierend zu dem Steuerkonus als Anlagekonus ausgebildet innerhalb dieser Ringkomponente angeordnet ist, dass der Steuerkonus des Einstellbolzens in dessen festgelegtem Zustand vom Anlagekonus der anlegbaren Ringkomponente vollständig aufgenommen ist und dass das Kopfteil des Einstellbolzens neben dem Anlagekonus ein weiteres Konusteil aufweist, das sich in Richtung eines Eingriffsteils für ein Betätigungswerkzeug für den Einstellbolzen verjüngt. Dergestalt ist eine nach außen hin vorspringende, sich erweiternde Kopfform gegeben, die genug Raum lässt für die Aufnahme des Eingriffsteils im Kopfteil, um dergestalt das Angreifen eines geeigneten Betätigungswerkzeugs zu erlauben. Insoweit lässt sich ein im Durchmesser vergrößertes Eingriffsteil erhalten für einen verbesserten Angriff mit dem Betätigungswerkzeug gegenüber Lösungen, bei denen unter Wegfall des weiteren Konus das Eingriffsteil unmittelbar in den Steuerkonus von seiner freien Stirnseite her eingebracht wäre, die als Steuerfläche insoweit bündig mit der vorderen freien Stirnseite der Ringkomponente abschließen würde und insoweit in radialer Richtung gesehen nur wenig Platz bietet.

Lässt man die für Stellmuttern üblichen Innen- und/oder Außengewinde an den jeweiligen Ringkomponenten weg, kommt man zu erweiterten Maschinenelement-Lösungen, wie Spannsätze, Führungsbuchsen oder Lager, wie beispielsweise Radialgleitlager. Die angesprochenen Innenumfangsseiten der insoweit zylindrisch ausgebildeten, hohlen Ringkomponenten gelten dann als Anlageteile für Komponenten, respektive für Drittbauteile, wie beispielsweise Achsen, Wellen oder Naben etc..

Die angesprochenen Reibungskräfte von Anlagefläche mit Steuerfläche können derart hoch sein, dass für eine sinnfällige Betätigung sogar vorgesehen werden muss, im Sinne einer den Reibkoeffizienten verringernden Maßnahme, die korrespondierenden Wandteile entsprechend von den Oberflächen her zu behandeln oder beispielsweise mit einer Beschichtung, wie einer aufzutragenden Lackschicht, zu versehen.

Als weiter besonders vorteilhaft hat es sich herausgestellt, sofern man die Steuerfläche als Steuerkonus ausbildet und die Anlagefläche als Anlagekonus; vorzugsweise mit derselben Neigung, um dergestalt in besonders hohem Maße eine Schrägkrafteinleitung zu bewirken bei hohem Reibungskoeffizienten, um dergestalt positionssicher die Einstelleinrichtung in dem Ringkomponentenverbund zu halten. Es kann aber bereits genügen, die Schrägflächenanlage über eine kürzere Wegstrecke vorzusehen, beispielsweise nur über die Breite oder einen Teil der Breite des Schraubenkopfes. Ferner können sich die Anlageflächen entlang einer Tangente oder Sekante bezogen auf den Eingriffsbolzen am Schraubenkopf und an der zugeordneten Ringkomponente erstrecken. Insbesondere erstrecken sich die gemeinsamen Anlageflächen zwischen der Unterseite des Schraubenkopfes und einer benachbarten Ausnehmung innerhalb dieser Ringkomponente.

Wie eingangs im Rahmen der DE 25 44 498 C3 erwähnt, brauchen nicht nur zwei Ringkomponenten zum Einsatz kommen, sondern drei und mehr Ringkomponenten, von denen zumindest ein Teil über ihre Wandstärke verringernde Membranteile miteinander einstückig verbunden sind. Es besteht aber auch die Möglichkeit, das angesprochene Maschinenelement nur mit zwei Ringkomponenten zu realisieren, die einen vorgebbaren axialen Abstand ohne Einsatz von membranartigen Wandteilen zueinander einnehmen und nur über die Einstelleinrichtung justierbar miteinander verbunden sind.

Die bei der erfindungsgemäßen Lösung eingesetzten Ringkörper sind bevorzugt gleichmäßig rund ausgebildet und bilden einen kreisförmig geschlossenen Gegenstand aus. Der jeweilige Ringkörper ist hohlzylindrisch ausgebildet, kann aber auch als massiver, geschlossener Körper ausgebildet sein, insbesondere wenn der dahingehende Ringkörper mit einem Außengewinde in korrespondierende Innengewindestrecken von hohlzylindrischen Drittbauteilen einzusetzen, insbesondere einzuschrauben, ist. Auch kann die Außenkontur des jeweiligen Ringkörpers anstelle der genannten gleichmäßig runden Kreisringfläche ein Viel- oder Mehreck sein und insbesondere auch eine unregelmäßige Außenkontur aufweisen, um dergestalt eine Angriffsfläche für Festlegewerkzeuge und Handhabungssysteme zu bilden. Mit dem erfindungsgemäßen Maschinenelement ist jedenfalls eine Lösung aufgezeigt, mit der sich dieses funktionssicher in zentrierender Weise an Drittbauteilen festlegen lässt; dies hat so keine Entsprechung im Stand der Technik.

Weitere vorteilhafte Ausgestaltungen sind Gegenstand der sonstigen Unteransprüche.

Im Folgenden wird die erfindungsgemäße Maschinenelement-Lösung anhand der Zeichnung näher erläutert. Dabei zeigen in prinzipieller und nicht maßstäblicher sowie teilweise vergrößerter Darstellung die
- Fig. 1: eine Stellmutter, im Wesentlichen bestehend aus zwei Ringkomponenten sowie einer Einstelleinrichtung gemäß der Schnittlinie I - I in Fig. 2;
- Fig. 2: eine stirnseitige Draufsicht entlang des Blickrichtungspfeils X in Fig. 1 und
- Fig. 3: eine perspektivische Vorderansicht auf die Stellmutter nach den Fig. 1 und 2.

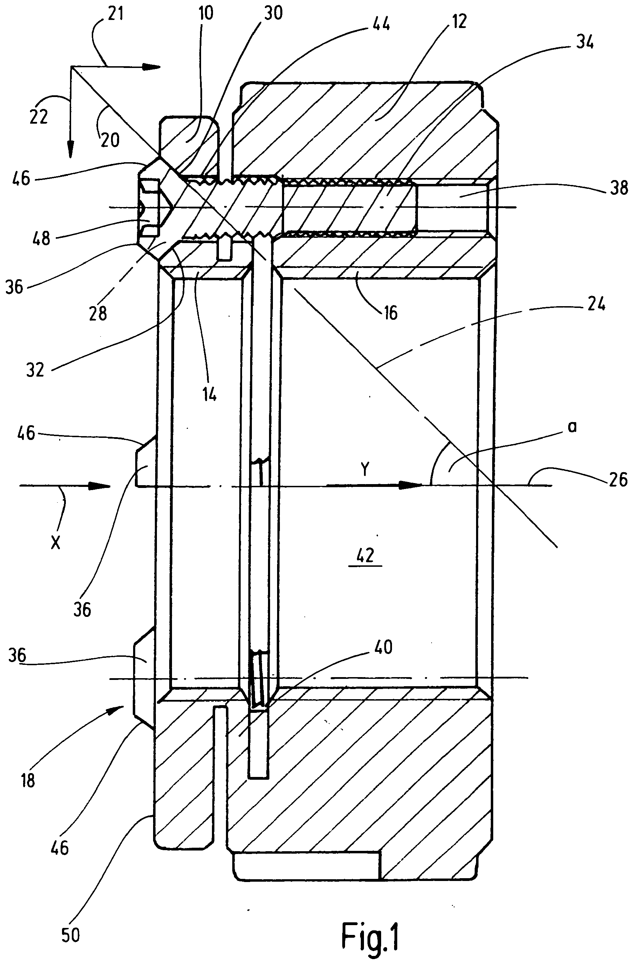

Das in Fig. 1 gezeigte Maschinenelement, das man fachsprachlich mit Stellmutter oder Gewindering bezeichnet, weist zwei Ringkomponenten 10, 12 auf, wie sie an Drittbauteilen, wie beispielsweise Achsen, Wellen oder Naben, festlegbar sind. Hierfür weisen die beiden Ringkomponenten 10, 12 auf ihrer jeweiligen Innenumfangsseite zwei durchgehende Gewindeabschnitte 14, 16 auf, die mit entsprechend zuordenbaren Gewindeabschnitten von Drittbauteilen (nicht dargestellt) in üblicher Weise in aufgeschraubter Weise in Verbindung bringbar sind. Mindestens die eine Ringkomponente 10 ist auf die weitere Ringkomponente 12 in einer mit Pfeil Y bezeichneten axialen Richtung mittels der Einstelleinrichtung 18 in einer Zustellbewegung zu bewegbar, um dergestalt die verschiedenen, miteinander in Eingriff befindlichen Gewindeabschnitte in spielfreier Weise gegenseitig zu verspannen und dergestalt die Stellmutter positionssicher am Drittbauteil (nicht dargestellt) festzulegen. Mittels der Einstelleinrichtung 18 erfolgt für die Zustellbewegung der beiden Ringkomponenten 10, 12 aufeinander zu eine reibungsbedingte Schrägkrafteinleitung, deren Kraftvektor 20 in der Fig. 1 dargestellt ist, wobei die dahingehende Schrägkraft 20 nach einer üblichen Kräftezerlegung sich in eine Axial-Zustellkraft 21 und in eine Radial-Zustellkraft 22 aufteilen lässt.

Wie sich des Weiteren aus der Fig. 1 ergibt, erfolgt die Schrägkrafteinleitung entlang des Kraftvektors 20 auf die Ringkomponente 10 in einer geneigten Richtung 24, die in einer fiktiven Verlängerung mit der Längsachse 26 des Gesamt-Maschinenelements nach der Fig. 1 einen Winkel a von etwa 45° einschließt. Der dahingehende Winkelwert ist bevorzugt; andere Lösungen sind hier denkbar mit Neigungswinkeln a zwischen 30° und 60°. Die angesprochene Ringkomponente 10 verfügt an der Stelle des Eingriffs mit der Einstelleinrichtung 18 über eine Ausnehmung 28, die randseitig zur Ringkomponente 10 hin von einer Anlagefläche 30 begrenzt ist. Diese Anlagefläche der Ringkomponente 10 folgt dabei gemäß Darstellung nach der Fig. 1 der geneigten Richtung 24 nach. Wie sich aus der Fig. 1 weiter ergibt, ist in einem gewindefreien Abschnitt der Einstelleinrichtung 18 diese mit einer geneigten Steuerfläche 32 versehen, die der Anlagefläche 30 mit ihrer geneigten Richtung 24 bei betätigter Einstelleinrichtung 18 nachfolgt, bei der die Einstelleinrichtung 18 in Anlage mit der Ringkomponente 10 ist.

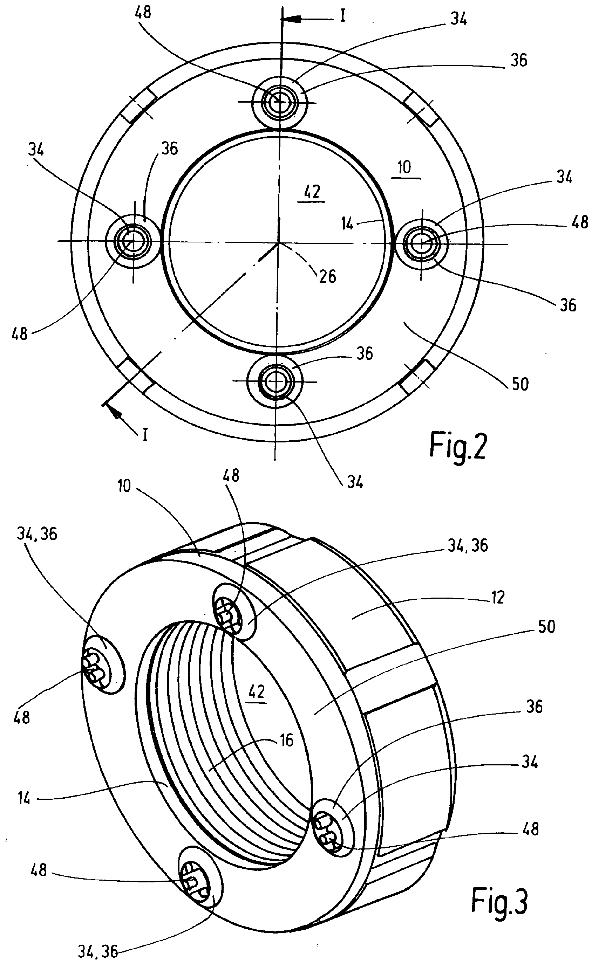

Gemäß der Darstellung nach den Fig. 2 und 3 verfügt die Einstelleinrichtung 18 über insgesamt vier Einstellbolzen 34, wobei der jeweilige Einstellbolzen 34 gemäß der Darstellung nach der Fig. 1 für die Schrägkrafteinleitung mittels seines gegenüber dem Einstellbolzen 34 im Durchmesser erweiterten Kopfteils 36 auf die Ringkomponente 10 einwirkt. Der Einstellbolzen 34 durchgreift dabei eine Durchgangsbohrung 44 im randseitigen Bereich der Ringkomponente 10 und ist an seinem freien Ende, welches dem jeweiligen Kopfteil 36 abgewandt gegenüberliegt, über ein Außengewinde mit dem Innengewinde einer Bohrung 38 innerhalb der zweiten Ringkomponente 12 mit dieser fest verbunden. Über eine Einstellung des Einstellbolzens 34 mittels seines zugehörigen Kopfteils 36 lässt sich dergestalt die Flankenspannung für die beiden Ringkomponenten 10, 12 bei an einem Drittbauteil (nicht dargestellt) festgelegter Spann- oder Stellmutter vorgeben.

Das erweiterte Kopfteil 36 eines jeden Einstellbolzens 34 ist hierfür gegenüber der axialen Richtung Y mit der geneigten Steuerfläche 32 versehen, die gemäß der Darstellung nach der Fig. 1 mit der geneigten Anlagefläche 30 der am Kopfteil 36 angelegten ersten Ringkomponente 10 zusammenwirkt, wobei die vorgebbare Neigung, also die Wahl des Neigungswinkels a, von Steuerfläche 32 und Anlagefläche 30 gleich ist. Im Übrigen bestimmt der Grad des Neigungswinkels a und der Grad der Überdeckung der aneinander anliegenden Flächen 30, 32 die erzeugbare Reibungskraft als Teil der Schrägkrafteinleitung mit.

Da neben den Ringkomponenten 10, 12, die im Wesentlichen rotationssymmetrisch zur Längsachse 26 ausgebildet sind, auch der jeweilige Einstellbolzen 34 der Einstelleinrichtung 18 rotationssymmetrisch ausgebildet ist, bildet die geneigte Steuerfläche 32 einen Steuerkonus aus, der in den Kopfteil 36 als Funktionsteil integriert ist, wobei die Anlagefläche 30 der anlegbaren Ringkomponente 10 mit korrespondierender Neigung zu dem Steuerkonus als Anlagekonus ausgebildet ist und gleichfalls vertieft in der Ringkomponente 10 ihren Einbauraum findet. Somit ist der Steuerkonus unter Anlage mit dem Anlagekonus im festgelegten Zustand des Einstellbolzens 34, wie in der Fig. 1 dargestellt, vollständig in der anlegbaren Ringkomponente 10 aufgenommen.

Das in Fig. 1 dargestellte Kräftediagramm macht deutlich, dass aufgrund der Schrägkrafteinleitung die Axial-Zustellkraft 21 gegebenenfalls geringer ausgebildet ist als die aufgebrachte Zustellkraft in axialer Richtung bei vergleichbarer Anordnung mit üblichen Zylinderkopfschrauben, wie beispielsweise in der Fig. 5 der DE 25 44 498 C3 aufgezeigt. Trotz dieser geringeren Axial-Zustellkraft 21 ist aufgrund der Schrägkraftanordnung über weite Flächenteile die Anlagefläche 30 mit einer vorgebbaren Reibungskraft in Anlage mit der Steuerfläche 32, was eine entsprechend große Hemmung ergibt mit der Folge, dass etwaig auftretende Rückstellkräfte den jeweiligen Einstellbolzen 34 nicht in lösender Weise betätigen können. Im Gegenteil, bei entsprechend großen Baumustern für das Maschinenelement kann es notwendig werden, zumindest eine der Wandteile von Steuerfläche 32 und Anlagefläche 30 derart zu behandeln, dass der Reibkoeffizient vermindert ist, um eine sichere Betätigung mit der Betätigungseinrichtung 18 sicherstellen zu können. Bevorzugt ist vorgesehen, dass am Kopfteil 36 ein Gleitlack aufgetragen wird. Für eine Oberflächenbehandlung kann es sinnvoll sein, die Außenseiten der Kopfteile 36 zu phosphatieren. Mit den dahingehenden Maßnahmen lässt sich jedenfalls der Selbsthemmungseffekt für die miteinander in Anlage befindlichen Konusteile in vorgebbarer Weise reduzieren, insbesondere je nach Anwendungsfall definiert einstellen.

Durch Verwendung der konisch ausgestalteten Kopfteile 36 für den jeweils zuordenbaren Einstellbolzen 34 können mithin bei gleicher Baugröße der Stellmutter größere Schrauben im Rahmen der Einstelleinrichtung 18 verwendet werden, d.h. es kann entweder die Sicherungswirkung gesteigert oder aber bei gleicher Sicherungswirkung die Anzahl der Schrauben 34, 36 reduziert werden, was Gewicht und Kosten sparen hilft. Zudem haben die konisch geformten Kopfteil 36 der Schrauben oder Einstellbolzen 34 eine Zentrierwirkung zwischen der Ringkomponente 10, die hier als Sicherungsteil einer Stellmutter wirkt, und der Ringkomponente 12 als dem eigentlichen Lastteil.

Auch können durch die angesprochene Trennung zwischen Lastteil 12 und Sicherungsteil 10 die einzelnen Funktionsabschnitte, beispielsweise in Form der Gewindeteile 16, 14 sowie der Plananlage, diese entsprechend ihrer Funktion unterschiedlich beschichtet werden. So wäre es beispielsweise möglich, eine Beschichtung mit hohem Reibungskoeffizient im Gewinde 14 des Sicherungsteils 10 zur besseren Sicherungswirkung zu verwenden. Demgemäß könnte eine Beschichtung mit geringerem Reibungskoeffizient im Gewinde 16 und an der Planfläche des Lastteils 12 zur Vermeidung sog. Stick-Slip-Effekte und der besseren Umsetzung des Anzugsmoments mittels der Einstelleinrichtung 18 in eine axiale Vorspannkraft gewählt werden.

Bei dem Ausführungsbeispiel nach der Fig. 1 sind die beiden Ringkomponenten 10, 12 als Sicherungs- bzw. Lastteil mittels eines Membranteils 40 in üblicher Weise für Stellmuttern miteinander verbunden. Es wäre auch denkbar, hier auf das Membranteil 40 zu verzichten, so dass die kostenintensive Herstellung für das Membranteil 40 entfallen kann. Die beiden Ringkomponenten 10, 12 würden dann als Stellmutterteil ausschließlich durch die Schraubenbolzen der Einstelleinrichtung 18 angesteuert werden. Da im dahingehenden Fall zwischen den einander benachbarten Stirnflächen der Ringkomponenten 10, 12 ein mediendurchlässiger Spalt entsteht, kann dieser durch Zwischenlegen oder Einvulkanisieren eines zusätzlichen Kunststoffrings (nicht dargestellt) abgedichtet werden, was beispielsweise in der Lebensmittelindustrie zur Vermeidung von sog. Schmutznestern vorteilhaft sein kann. Gleichzeitig kann durch den Kunststoffring eine Feder- oder Dämpfungswirkung erzielt werden, die die Einstellung der beiden Ringkomponenten 10, 12 mittels der Einstelleinrichtung 18 zueinander beeinflusst. Die einzelnen Ringkomponenten 10, 12 können auch jeweils wahlweise ein Außengewinde anstatt eines Innengewindes aufweisen, so dass man eine zweiteilige Sicherungsschraube (nicht dargestellt) in üblicher Weise erhält. Ferner könnten Innen- und Außendurchmesser für die jeweilige Ringkomponente 10, 12 anders gewählt sein in Abhängigkeit des jeweils aufzunehmenden Drittbauteils im Bereich der inneren Mittenausnehmung 42 von Ringkomponente 10 und Ringkomponente 12.

Durch die Verwendung des Steuerkonus am Kopfteil 36, der sich in Richtung der Ringkomponente 12 verjüngt und der in Richtung der Bohrung 44 der ersten Ringkomponente 10 ausmündet, die deckungsgleich mit der mit einem Innengewinde für den Eingriff mit einem korrespondierend ausgebildeten Außengewinde des Einstell- oder Schraubenbolzens 34 versehenen Bohrung 38 in der zweiten Ringkomponente 12 ist, wird deutlich, dass trotz axialer Längenreduzierung für die erste Ringkomponente 10 noch sehr viel verbleibendes Wandteilmaterial vorhanden ist, um die Schrägkrafteinleitung entlang des Kraftteils 20 entsprechend abstützen zu können. Ein Versagen des Maschinenelements ist insoweit ausgeschlossen, auch wenn man die Ringkomponente 10 in axialer Baurichtung gesehen weitestgehend von den Abmessungen her reduzieren sollte. Im Sinne der weiteren Bauraumoptimierung ist vorgesehen, dass neben dem Anlagekonus das Kopfteil 36 des jeweiligen Einstellbolzens 34 ein weiteres Konusteil 46 aufweist, das sich in Richtung eines Eingriffsteils 48 für den Ein- oder Angriff eines nicht näher dargestellten Betätigungswerkzeugs nach außen zur Umgebung hin wiederum um vorzugsweise 45° zur Längsachse 26 des Maschinenelements gesehen verjüngt. Dergestalt ist eine nach außen hin vorspringende, sich erweiternde Kopfform gegeben, die genug Raum lässt für die Aufnahme des Eingriffsteils 48 im Kopfteil 36, um dergestalt das Angreifen eines geeigneten Betätigungswerkzeugs zu erlauben. Insoweit lässt sich ein im Durchmesser vergrößertes Eingriffsteil 48 erhalten für einen verbesserten Angriff mit dem Betätigungswerkzeug gegenüber Lösungen, bei denen unter Wegfall des weiteren Konus 46 das Eingriffsteil 48 unmittelbar in den Steuerkonus von seiner freien Stirnseite her eingebracht wäre, die als Steuerfläche 32 insoweit bündig mit der vorderen freien Stirnseite 50 der Ringkomponente 10 abschließen würde und insoweit in radialer Richtung gesehen nur wenig Platz bietet. Als Eingriffsteil 48 soll bevorzugt ein Mitnahmeprofil in Vielrundform zum Einsatz kommen.

Insgesamt ist mit der erfindungsgemäßen Maschinenelement-Lösung die Realisierung eines Baukastensystems möglich, bei dem sich beispielsweise unterschiedlich ausgebildete Ringkomponenten 12 als Lastteil der Sicherungs- oder Stellmutter mit nur einer Art von Ringkomponenten 10 als Sicherungsteil kombinieren lassen. Sollte das in Fig. 1 gezeigte Feder- oder Membransystem, also das Membranteil 40, entfallen, kann wiederum die gesamte Stellmutter als Maschinenelement in der Baulänge entsprechend reduziert werden. Ferner können für das Membranteil 40 fertigungstechnisch anspruchsvolle; jedoch für diese Aufgabe benötigte Materialien, wie Edelstähle oder Titan, die sich nur schwer zerspanen lassen, entfallen, was der wirtschaftlichen Fertigung zugutekommt. Das in Fig. 1 gezeigte Maschinenelement, auch soweit das Membranteil 40 entfallen ist, lässt sich als Verpackungseinheit an den Kunden oder Interessenten ausliefern, der dann vor Ort das Maschinenelement als Ganzes erst aufbaut und insoweit an dem Drittbauteil vervollständigt. Dies hilft, Montagekosten für den Sicherungsmutterhersteller einzusparen.

Lässt man gemäß der Darstellung nach der Fig. 1 für die Ringkomponenten 10, 12 die Innengewindeabschnitte 14, 16 weg, ergeben sich insoweit plane, zylindrische Innenumfangsflächen, die die innere Mittenausnehmung 42 radial nach außen hin begrenzen, so dass insoweit bei gleichem erfindungsgemäßen Einstelleinrichtungsaufbau 18 anstelle einer Stellmutter ein Spannsatz oder eine Führungsbuchse erhalten ist sowie wesentliche Teile eines Lagers, beispielsweise in Form eines Radialgleitlagers (nicht dargestellt). Ferner können, wie im Stand der Technik aufgezeigt, je nach Anwendungsfall mehr als zwei Ringkomponenten 10, 12 zum Einsatz kommen.

## Patentansprüche

1. Maschinenelement, aufweisend einzelne Ringkomponenten (10,12), die an Drittbauteilen, wie beispielsweise Achsen, Wellen oder Naben festlegbar sind, von denen mindestens eine Ringkomponente (10) auf mindestens eine weitere Ringkomponente (12) in einer axialen Richtung (Y) gesehen mittels einer Einstelleinrichtung (18) in einer Zustellbewegung betätigbar ist, wobei mittels der Einstelleinrichtung (18) für die Zustellbewegung eine Schrägkrafteinleitung auf mindestens eine der Ringkomponenten (10) in einer geneigten Richtung (24) erfolgt, die von der axialen Zustellrichtung (Y) abweicht, und wobei diejenige Ringkomponente (10), die der Schrägkrafteinleitung ausgesetzt ist, mit zumindest einem Teil einer Anlagefläche (30) für die Anlage mit der Einstelleinrichtung (18) der geneigten Richtung (24) nachfolgt, wobei in einem gewindefreien Abschnitt der Einstelleinrichtung (18) diese derart eine geneigte Steuerfläche (32) aufweist, dass sie der Anlagefläche (30) mit ihrer geneigten Richtung (24) zumindest bei betätigter Einstelleinrichtung (18) nachfolgt, wobei die Einstelleinrichtung (18) mindestens einen Einstellbolzen (34) aufweist, der für die Schrägkrafteinleitung mittels seines gegenüber dem Einstellbolzen (34) im Durchmesser erweiterten Kopfteils (36) zumindest auf eine der Ringkomponenten (10) diese dabei durchgreift und mindestens mit einer jeweils weiteren Ringkomponente (12) verbunden ist, wobei die geneigte Steuerfläche (32) Bestandteil eines Steuerkonus am Kopfteil (36) des Einstellbolzens (34) ist, die Anlagefläche (30) der anlegbaren Ringkomponente (10) korrespondierend zu dem Steuerkonus als Anlagekonus ausgebildet innerhalb dieser Ringkomponente (10) angeordnet ist, der Steuerkonus des Einstellbolzens (34) in dessen festgelegtem Zustand vom Anlagekonus der anlegbaren Ringkomponente (10) vollständig aufgenommen ist und das Kopfteil (36) des Einstellbolzens (34) neben dem Anlagekonus ein weiteres Konusteil (46) aufweist, das sich in Richtung eines Eingriffsteils (48) für ein Betätigungswerkzeug für den Einstellbolzen (34) verjüngt.

2. Maschinenelement nach Anspruch 1, **dadurch gekennzeichnet, dass** das erweiterte Kopfteil (36) gegenüber der axialen Richtung (Y) mit der geneigten Steuerfläche (32) versehen ist, die mit der geneigten Anlagefläche (30) der am Kopfteil (36) anlegbaren Ringkomponente (10) zusammenwirkt und dass die vorgebbare Neigung (a) von Steuerfläche (32) und Anlagefläche (30) gleich gewählt ist.

3. Maschinenelement nach Anspruch 1 oder 2, **dadurch gekennzeichnet, dass** zumindest teilweise die miteinander in Anlage kommenden Wandteile (30, 32) von Steuer- und/oder Anlagekonus mit einer den Reibkoeffizienten zwischen diesen Wandteilen vermindernden Oberflächenbehandlung und/oder mit einer Beschichtung, wie einer aufgetragenen Gleitlackschicht, versehen sind.

4. Maschinenelement nach einem der vorstehenden Ansprüche, **dadurch gekennzeichnet, dass** die jeweiligen Ringkomponenten (10, 12) voneinander separiert und/oder zumindest ein Teil der einander benachbarten Ringkomponenten (10, 12) mittels eines Membranteils (40) miteinander verbunden sind.

5. Maschinenelement nach einem der vorstehenden Ansprüche, **dadurch gekennzeichnet, dass** zwischen zwei (10, 12) bis vier Ringkomponenten zum Einsatz kommen, wobei zumindest die beiden zuäußerst liegenden Ringkomponenten (10, 12) des Ringverbundes mittels der Einstelleinrichtung (18) die jeweilige Zustellbewegung ausführen.

6. Maschinenelement nach einem der vorstehenden Ansprüche, **dadurch gekennzeichnet, dass** es als
- Stellmutter,
- Spannsatz,
- Führungsbuchse oder
- Lager, vorzugsweise als Radialgleitlager,
verwendbar ist.

## Claims

1. Machine component comprising individual ring components (10/12), which can be attached to third components, such as axles, shafts or hubs, at least one of said ring components (10) being able to be actuated onto at least one further ring component (12), viewed in an axial direction (Y), by means of an adjustment device (18) in a feed movement, wherein, for the feed movement, an oblique force is applied by means of the adjustment device (18) to at least one of the ring components (10) in an inclined direction (24), which is different from the axial feed direction (Y), and wherein the ring component (10) that is exposed to the application of oblique force follows the inclined direction (24) with at least part of a contact face (30) for contact with the adjustment device (18), wherein, in a non-threaded portion of the adjustment device (18), said device comprises an inclined control surface (32) in such a way that it follows the contact surface (30) with its inclined direction (24) at least when the adjustment device (18) is actuated, wherein the adjustment device (18) comprises at least one adjustment bolt (34), which, for the purpose of applying oblique force by means of its head part (36), which has an extended diameter compared to the adjustment bolt (34), to at least one of the ring components (10), passes through said ring component in this process and is connected to at least one of any respective further ring component (12), wherein the inclined control surface (32) is part of a control cone on the head part (36) of the adjustment bolt (34), the contact face (30) of the ring component (10) with which contact can be made being arranged inside this ring component (10) and designed as a contact cone corresponding to the control cone, the control cone of the adjustment bolt (34) being fully received by the contact cone of the ring component (10) with which contact can be made in its fixed position, and the head part (36) of the adjustment bolt (34) comprising, in addition to the contact cone, a further cone part (46) which tapers in the direction of an engagement part (48) for an actuating tool for the adjustment bolt (34).

2. Machine component according to claim 1, **characterised in that** the extended head part (36) is furnished with the inclined control surface (32) relative to the axial direction (Y), said control surface interacting with the inclined contact face (30) of the ring component (10) that can be placed in contact with the head part (36) and **in that** the predefinable inclination (a) of the control surface (32) and the contact face (30) are selected such that they are the same.

3. Machine component according to either claim 1 or claim 2, **characterised in that** the wall parts (30, 32) of the control and/or contact cone that come into contact with one another are at least partially furnished with a surface treatment that reduces the friction coefficient between these wall parts and/or with a coating such as an applied antifriction coating.

4. Machine component according to any one of the preceding claims, **characterised in that** the respective ring components (10, 12) are separated from one another and/or at least part of the adjacent ring components (10, 12) is interconnected by means of a membrane part (40).

5. Machine component according to any one of the preceding claims, **characterised in that** between two (10, 12) to four ring components are used, wherein at least the two outermost ring components (10, 12) of the composite ring arrangement execute the relevant feed movement by means of the adjustment device (18).

6. Machine component according to any one of the preceding claims, **characterised in that** it can be used as an
- adjusting nut,
- clamping set,
- guide bush or
- bearing, preferably as a radial plain bearing.

## Revendications

1. Elément de machine, comportant divers composants (10, 12) annulaires qui peuvent être fixés à des pièces tierces, comme par exemple à des axes, des arbres ou des moyeux, dont au moins un composant (10) annulaire peut être actionné dans un mouvement d'avance au moyen d'un dispositif (18) de réglage considéré dans une direction (Y) axiale sur au moins un autre composant (12) annulaire, dans lequel, au moyen du dispositif (18) de réglage il se produit pour le déplacement d'avance l'application d'une force inclinée sur au moins l'un des composants (10) annulaires dans une direction (24) inclinée qui s'écarte de la direction (Y) axiale d'avance, et dans lequel le composant (10) annulaire, qui est soumis à l'application d'une force inclinée, suit par au moins une partie d'une surface (30) de contact pour le contact avec le dispositif (18) de réglage la direction (24) inclinée, dans lequel, dans une partie non filetée du dispositif (18) de réglage, celui-ci a une surface (32) inclinée de commande de manière à ce qu'elle suive la surface (30) de contact avec sa direction (24) inclinée au moins lorsque le dispositif (18) de réglage est actionné, dans lequel le dispositif (18) de réglage a au moins un boulon (34) de réglage qui, pour l'application d'une force inclinée, au moyen de sa partie (36) de tête élargie en diamètre par rapport au boulon (34) de réglage, au moins sur l'un des composants (10) annulaires pénètre dans celui-ci et est relié au moins à un autre composant (12) annulaire respectif, dans lequel la surface (32) inclinée de commande est une partie constitutive d'un cône de commande à la partie (36) de tête du boulon (34) de réglage, la surface (30) de contact du composant (10) annulaire pouvant être appliquée correspondant au cône de commande, est disposée en étant constituée en cône de contact à l'intérieur de ce composant (10) annulaire, le cône de commande du boulon (34) de réglage est dans son état fixé reçu entièrement par le cône de contact du composant (10) annulaire pouvant être appliqué et la partie (36) de tête du boulon (34) de réglage a outre le cône de contact une autre partie (46) de cône qui se rétrécit en direction d'une partie (48) de pénétration d'un outil d'actionnement du boulon (34) de réglage.

2. Elément de machine suivant la revendication 1, **caractérisé en ce que** la partie (36) de tête élargie est pourvue, en face de la direction (Y) axiale, de la surface (32) inclinée de commande, qui coopère avec la surface (30) inclinée de contact du composant (10) annulaire pouvant être appliqué à la partie (36) de tête et **en ce que** l'inclinaison (a) pouvant être donnée à l'avance de la surface (32) de commande est choisie égale à celle de la surface (30) de contact.

3. Elément de machine suivant la revendication 1 ou 2, **caractérisé en ce qu'**au moins en partie les parties (30, 32) de paroi venant en contact l'une avec l'autre du cône de commande et/ou du cône de contact sont pourvues d'un traitement de surface diminuant le coefficient de frottement entre ces parties de paroi et/ou d'un revêtement, comme d'une couche déposée de vernis glissant.

4. Elément de machine suivant l'une des revendications précédentes, **caractérisé en ce que** les composants (10, 12) annulaires respectifs sont séparés les uns des autres et/ou au moins une partie des composants (10, 12) annulaires voisins l'un de l'autre sont reliés entre eux au moyen d'une partie (40) formant membrane.

5. Elément de machine suivant l'une des revendications précédentes, **caractérisé en ce qu'**on utilise entre deux (10, 12) à quatre composants annulaires, dans lequel au moins l'un des deux composants (10, 12) annulaires se trouvant en appui vers l'extérieur du composite annulaire exécute, au moyen du dispositif (18) de réglage, le déplacement d'avance respectif.

6. Elément de machine suivant l'une des revendications précédentes, **caractérisé en ce qu'**il peut être utilisé comme
- écrou de réglage,
- ensemble de serrage,
- douille de guidage ou
- palier, de préférence palier lisse radial.
